# EUROPEAN PATENT APPLICATION

(11) **EP 4 793 028 A1**
(43) Date of publication of application: **19.08.2026**
(21) Application number: 26158873.5
(22) Date of filing: 16.02.2026
(51) Int. Cl.: B29C 70/54, B29D 99/00, B32B 5/02, B32B 5/12, B32B 5/26, B32B 7/12, D03D 11/00, F03D 1/06

(54) **REINFORCED STRUCTURAL LAYER AND WIND TURBINE BLADE**

(30) Priority: 18.02.2025 CN 202510178776
(71) Applicant: Envision Energy Co., Ltd., Wuxi, Jiangsu 214443 (CN)
(72) Inventor: MA, Hao, Wuxi, Jiangsu, 214443 (CN); LIAO, Haoran, Wuxi, Jiangsu, 214443 (CN); SUN, Xiaoyu, Wuxi, Jiangsu, 214443 (CN); ZHANG, Xiangyang, Wuxi, Jiangsu, 214443 (CN); OVERGAARD, Lars Christian Terndrup, Wuxi, Jiangsu, 214443 (CN); SKOVSGAARD, Simon Peter Hald, Wuxi, Jiangsu, 214443 (CN)
(74) Representative: Balder IP Law, S.L.

(57) **Abstract**

A reinforced structural layer (100) and a wind turbine blade (200) are provided. The reinforced structural layer (100) includes a plurality of fibers (110) that includes a first fiber, a second fiber, and a third fiber. Any two of the first fiber, the second fiber, and the third fiber are arranged at an angle to each other, and the angle formed between any two fibers is different from the angle between any other two fibers. The plurality of fibers (110) are connected to form a fiber structural layer (120) such that extension directions of the plurality of fibers (110) are oriented in different directions. The reinforced structural layer (100) can form an amorphous reinforcement configuration that effectively resists crack propagation in various directions, thereby effectively countering random crack propagation and providing more comprehensive reinforcement.

## Description

### TECHNICAL FIELD

The present disclosure relates to the technical field of wind power generation technology, and in particular to a reinforced structural layer and a wind turbine blade.

### BACKGROUND

In the field of wind power generation, blades are one of core components of wind turbines, and their performance directly impacts efficiency and reliability of an entire power generation system. Critical areas such as blade root interfaces and spar cap interfaces endure significant loads during operation. Therefore, reinforcement of these interfaces is necessary to reduce failure occurrence and enhance the overall performance and lifespan of the blades.

In existing technologies, the spar cap interfaces are typically reinforced using interlayer fabrics. Reinforcement methods for blade root interfaces commonly involve wrapping continuous fibers around unidirectional (UD) blocks or bushing assemblies to enhance performance of the blade root interfaces. However, these conventional reinforcement approaches exhibit high orientation dependency, enabling the performance enhancement only in specific directions and failing to fail to address random propagation of cracks, resulting in suboptimal reinforcement effectiveness.

### SUMMARY

The objective of the present disclosure is to provide a reinforced structural layer and wind turbine blade capable of effectively resisting crack propagation in all directions, effectively countering random crack propagation, and delivering more comprehensive reinforcement effects.

In one aspect, an embodiment of the present disclosure provides a reinforced structural layer comprising: a plurality of fibers including a first fiber, a second fiber, and a third fiber, where any two of the first fiber, the second fiber, and the third fiber are arranged at an angle to each other, and the angle formed between any two fibers is different from the angle between any other two fibers, and the plurality of fibers are connected to form a fiber structural layer such that extension directions of the plurality of fibers are oriented in different directions

Beneficial effects: in the reinforced structural layer, due to any two of the first fiber, the second fiber, and the third fiber being arranged at an angle to each other, and any two angles being distinct, which enables the extension directions of the plurality of fibers to face different directions. The reinforced structural layer can form an amorphous reinforcement pattern that effectively resists crack propagation in various directions, thereby effectively countering random crack propagation and providing more comprehensive reinforcement. Compared to existing technologies that only enhance interface properties in a single direction, the reinforced structural layer can provide the comprehensive reinforcement in multiple directions, reducing the risk of interface failure.

Furthermore, since the reinforced structural layer adopts an amorphous reinforcement form, it is suitable not only for narrow and thin structural interfaces, but also for large curved surfaces and thick blade root interfaces. This enables the reinforced structural layer 100 to be widely applied to various critical interfaces of a wind turbine blade 200, such as blade root interfaces and spar cap interfaces. Compared to the existing reinforcement solutions that are limited to specific shapes and thicknesses, the reinforced structural layer 100 has greater adaptability, enabling reinforcement of a broader range of components.

Taking a wind turbine blade as an example, the reinforced structural layer is installed on the wind turbine blade. By reinforcing key parts such as the blade root interface, the overall performance and lifespan of the wind turbine blade can be effectively improved. The reinforced wind turbine blade can better withstand wind loads and reduce performance degradation caused by interface failure, thereby increasing the power generation efficiency of the wind turbine. This approach reduces blade damage and maintenance downtime caused by interface failure, thereby improving operational efficiency and reliability of wind turbines.

In an optional embodiment, a length of each of the plurality of fibers is 1mm to 150mm.

Beneficial effects: since the plurality of fibers within the reinforced structural layer have lengths ranging from 1 mm to 150 mm, the plurality of fibers are relatively short. When the plurality of short fibers are arranged and distributed, it is easy to cause the extension direction of the plurality of fibers to face multiple directions, forming an amorphous reinforcement that can effectively resist crack propagation in all directions, thereby effectively countering random crack propagation and achieving more comprehensive reinforcement effects.

In an optional embodiment, the plurality of fibers are formed into a fiber structural layer through a weaving process or a bonding process.

Beneficial effects: the weaving process can interweave and entangle the plurality of fibers to form a dense and stable structural layer, which can effectively restricts displacement of the fibers, and enhance synergistic effect among the plurality of fibers each other, thereby improving the overall tensile and shear resistance of the fiber structural layer. This enables the structural layer to maintain the structural integrity under complex external forces, and is less likely to deform or disintegrate. For example, in the dynamic operating environment of the wind turbine blade, it can better accommodate various stress changes caused by wind loads.

The bonding process can firmly connect the fibers together using an adhesive, forming a continuous bonded interface among the fibers. This further enhances the structure integrity and stability of the fiber structural layer, ensuring that the performance of the fiber structural layer may not be reduced due to the fibers loosening during long-term use.

Weaving or bonding facilitates the uniform distribution of the plurality of fibers within the fiber structural layer, enabling stress to be transmitted and dispersed more evenly across each of the fibers. When the fiber structural layer is subjected to the external forces, the plurality of fibers can collectively bear the load, preventing premature failure caused by localized stress concentration and thereby enhancing the reinforcement effect on the interfaces.

The weaving process or the bonding process is relatively simple, and thus facilitating large-scale production of the fiber structural layer and reducing manufacturing costs.

In an optional embodiment, the reinforced structural layer further comprises a flexible support layer. The fiber structural layer is coated on an outer wall surface of the flexible support layer, and the flexible support layer and the fiber structural layer are formed into the reinforced structural layer through the weaving process.

Beneficial effects: during the weaving process, the plurality of fibers are randomly distributed across the flexible support layer. The flexible support layer serves as a stable foundation, providing a relatively flat and stable bearing surface for the plurality of fibers. This ensures the fibers maintain precise relative positioning during arrangement and weaving, preventing disorder and misalignment caused by the inherent flexibility and fluidity of the plurality of fibers. This not only enhances weaving efficiency of weaving, but also ensures that the structural layer has a more uniform distribution of the fibers.

Through the weaving process, the flexible support layer and the fiber structural layer are integrated into a tightly interconnected whole. This effectively prevents relative slippage or separation between the structural layer and the flexible support layer, ensuring the integrity of the reinforced structural layer under long-term use and various operating conditions.

In addition, the flexible support layer can provide supplementary support and cushioning for the reinforced structural layer. When subjected to external forces, the flexible support layer disperses stress, preventing stress concentration in localized areas of the structural layer and reducing the risk of the fiber fracture within the structural layer. Compared to relying solely on the structural layer, the overall strength and toughness of the reinforced structural layer are significantly enhanced. This enables the reinforced structural layer to better maintain shape and performance stability under complex loading conditions, such as bending and torsion experienced by the wind turbine blade during strong winds, effectively improving the reliability and durability of the reinforced structural layer.

In an optional embodiment, the reinforced structural layer further comprises an adhesive, where a content of the adhesive accounts for 1% to 12% of a total content of the reinforced structural layer.

Beneficial effects: when the adhesive content constitutes 1% to 12% of the total content of the reinforced structural layer, the adhesive can provide sufficient bonding strength without causing excessive hardening of the reinforced structural layer that would compromise its flexibility, so that the reinforced structural layer 100 can maintain sufficient rigidity to withstand significant loads while retaining flexibility to accommodate deformation, meeting the comprehensive structural performance requirements of the wind turbine blade under varying operating conditions.

The adhesive can fill a minute gap between each of the plurality of fibers each other, enabling stress to transfer more uniformly and smoothly throughout the fiber network. This helps prevent stress concentration points, reduces the risk of the structural damage caused by excessive localized stressing, and further enhances the reliability and durability of the reinforced structural layer, extending the service life of the reinforced structural layer.

In an optional embodiment, a weight per unit area of the fiber structural layer is a, which satisfies a ≤ 600g/m².

Beneficial effects: by limiting the weight per unit area of the fiber structural layer to be less than 600 g/m², so that the fiber structural layer remains relatively thin and lightweight. In application scenarios such as the wind turbine blade, the lighter fiber structural layer facilitates overall lightweight design for the components. The rotational inertia force that the wind turbine blade need to overcome during rotation is reduced, enabling the wind turbine blade to respond more rapidly to wind speed changes and thereby improving the efficiency of converting wind energy into electrical energy.

In an optional embodiment, a diameter of each of the plurality of fibers is d, which satisfies 9µm ≤ d ≤ 24µm.

Beneficial effects: if the diameter d of each of the fibers satisfies 9µm ≤ d ≤ 24µm, the fiber can achieve a favorable balance between strength and flexibility. The finer fiber (e.g., approximate to 9µm) has a higher specific surface area, which can form a tighter interface connection when combined with adhesives, etc., which is conducive to stress transfer and thus enhances the overall strength of the reinforced structural layer. Conversely, the relatively thicker fiber (e.g., approximate to 24µm) can provide better tensile and bending resistance, and is less likely to break when subjected to large external forces. This enhances the stability of the reinforced structural layer and ensuring more reliable performance in complex loading conditions.

In an optional embodiment, the plurality of fibers are at least one of glass fibers, carbon fibers, natural fibers, or thermoplastic fibers.

Beneficial effects: the glass fibers have high strength and good chemical stability at relatively low cost, and can provide fundamental mechanical support and environmental resistance for the reinforced structural layer.

The carbon fibers have ultra-high strength and lightweight properties, which can significantly enhance the structural load-bearing capacity and rigidity to meet the application scenarios that require high performance.

The natural fibers such as hemp and bamboo fibers have advantages such as renewability, environmental friendliness, and low density.

In another aspect, an embodiment of the present disclosure further provides a wind turbine blade, comprising a layup structure and a reinforced structure layer. The layup structure comprises an inner layer and an outer layer arranged at intervals, where an accommodating cavity is formed between the inner layer and the outer layer. The reinforced structure layer is disposed within the accommodating cavity.

Beneficial effects: the wind turbine blade features the reinforced structural layer positioned within an accommodating space between the inner layer and the outer layer. As the reinforced structural layer adopts an amorphous reinforcement form, it effectively resists crack propagation in all directions, and effectively countering random crack propagation. This significantly improves the overall performance and lifespan of the wind turbine blade. The reinforced blade better withstands wind loads, reduces performance degradation caused by interface failure, and consequently enhances the power generation efficiency of the wind turbine. It also minimizes blade damage and downtime for maintenance due to interface failure, thereby improving the operational efficiency and reliability of the wind turbine.

In addition, as the reinforced structural layer adopts an amorphous reinforcement form, it is suitable for large-curvature, thick-section blade root interfaces. This enables the reinforced structural layer to be widely applied to multiple critical interfaces of the wind turbine blade, such as blade root interfaces and spar cap interfaces.

In an optional embodiment, the wind turbine blade further comprises a plurality of unidirectional (UD) blocks, where the plurality of UD blocks are spaced apart in the accommodating cavity. The reinforced structural layer is disposed between the UD blocks and the inner layer, and/or the reinforced structural layer is disposed between the UD blocks and the outer layer.

Beneficial effects: the UD blocks are critical load-bearing components within the wind turbine blade, constituting high-risk stress zones. The inclusion of the reinforced structural layer between the UD blocks and the inner layer and/or the outer layer significantly enhances the bonding strength between the UD blocks and these plies. When the wind turbine blade bears wind loads, immense forces act between the UD block and the layup structure. The reinforcement layer can effectively disperse and transfer these stresses, and can avoid delamination, cracking, and other problems caused by weak connection points, so as to enhance the overall structural reliability and stability of the wind turbine blade, and ensure safe and stable operation even under severe wind conditions.

In an optional embodiment, the inner layer comprises a first connection segment, a second connection segment, and a third connection segment connected sequentially, where a distance between the first connection segment and the outer layer is greater than a distance between the third connection segment and the outer layer.

Along a direction from the first connection segment to the third connection segment, a distance between the second connection segment and the outer layer gradually decreases; wherein the UD block extends from the first connection segment to the second connection segment, and the reinforced structural layer extends from the first connection segment to the third connection segment.

Beneficial effects: the varying spacing between different connection segments of the inner layer and the outer layer form a gradient structure. Along the direction from the first connection segment to the third connection segment, the distance between the second connection segment and the outer layer gradually decreases, enabling a smoother stress transition from the inner layer to the outer layer during stress transmission. The extended arrangement of the UD block and the reinforced structural layer complements the gradient structure, and further guiding stress distribution along optimal pathways. This effectively prevents stress concentration in localized areas, significantly enhancing the overall stress-bearing capacity and structural stability of the wind turbine blade, while reducing the risk of blade damage caused by stress concentration.

In an optional embodiment, the reinforced structural layer is coated on an outer wall surface of the UD block, and the UD block is disposed at a root of the wind turbine blade.

Beneficial effects: the root of the wind turbine blade is a critical part that connects the wind turbine blade with a hub, enduring immense loads and stresses. Placing UD block at the root of wind turbine blade and wrapping the outer wall of UD block with the reinforced structural layer can greatly enhance the structural strength and connection stability of the root. This ensures a secure and reliable connection between the wind turbine blade and the hub, and preventing serious problems such as loosening and detachment during operation.

In an optional embodiment, the wind turbine blade further comprises a plurality of bushing assemblies, where the plurality of bushing assemblies are spaced apart within the accommodating cavity, and one bushing assembly is disposed between any two adjacent UD blocks. The reinforced structural layer is coated on an outer wall surface each of the bushing assemblies, and the bushing assemblies are positioned at the root of the wind turbine blade.

Beneficial effects: the plurality of bushing assemblies are critical structural elements connecting the wind turbine blade to other components such as a turbine hub, and are located at the root of the wind turbine blade to provide a reliable mechanical connection point for the wind turbine blade. The plurality of bushing assemblies are distributed at intervals, and enable more uniform distribution of connection forces across the root of the wind turbine blade, so as to avoid excessive stress concentration at single point, enhance the overall stability of the connection between the wind turbine blade and the turbine hub, and prevent hazardous situations such as loosening or detachment of the wind turbine blade.

### BRIEF DESCRIPTION OF THE DRAWINGS

To more clearly illustrate the technical solutions of embodiments of the present disclosure, a brief introduction will be given to the accompanying drawings required for the embodiments. It is evident that the drawings described below are merely some embodiments of the present disclosure. For those skilled in the art, other drawings may be derived from these drawings without requiring creative labor.
FIG. 1 is a schematic diagram of an internal fiber distribution of a reinforced structural layer according to an embodiment of the present disclosure;
FIG. 2 is a schematic diagram of a layup structure of the reinforced structural layer according to an embodiment of the present disclosure;
FIG. 3 is a schematic diagram of another layup structure of the reinforced structural layer according to an embodiment of the present disclosure;
FIG. 4 is a sectional view of a wind turbine blade along an axial direction of the wind turbine blade according to an embodiment of the present disclosure;
FIG. 5 is a sectional view of the wind turbine blade along a circumferential direction of the wind turbine blade according to an embodiment of the present disclosure.

### DETAILED DESCRIPTION OF EMBODIMENTS

In the field of wind power generation, blades are one of core components of wind turbines, with their performance directly impacting the efficiency and reliability of the entire power generation system. Critical parts of a blade, such as a blade root interface and a spar cap interface endure immense loads. Therefore, it is necessary to reinforce these interfaces to reduce occurrence of failures and enhance the overall performance and lifespan of the blade.

Currently, common interface reinforcement solutions on the market fall into two main categories: methods for reinforcing spar cap interfaces and methods for reinforcing blade root interfaces.

The spar cap interfaces are typically reinforced using interlaminar fabrics. The interlaminar fabrics have functions of both flow guidance and fracture toughness enhancement, can effectively improve interlaminar interface properties of main beams. However, this reinforcement method is only suitable for thin and narrow interlaminar interfaces of the main beams, and cannot be applied to interface reinforcement of large curved surfaces and large thick surfaces such as the blade roots. In addition, the reinforcement effect of the interlaminar fabrics primarily depends on fiber continuity and orientation of fibers. The interlaminar fabrics can enhance both a plane direction and a perpendicular direction to the plane, resulting in a high orientation of the reinforcement effect of the interlaminar fabrics. This often only improves interface properties in one specific direction, failing to address the random propagation of cracks.

Methods for reinforcing blade root interfaces typically involve wrapping continuous fibers around UD blocks or bushing assemblies to enhance interface performance. However, this reinforcement method also exhibits high orientation dependency, only enhancing interface properties in some one direction. Due to the large curved surface and significant thickness of blade root interfaces, crack initiation and propagation often occur randomly. Existing reinforcement solutions cannot effectively enhance interface properties in the weaker direction, resulting in poor reinforcement and increased risk of blade root failure.

Therefore, an embodiment of the present disclosure attempts to design a reinforced structural layer capable of effectively resisting crack propagation in various directions.

Based on this, the present disclosure enables a plurality of fibers to extend in various directions by arranging any two of a first fiber, a second fiber, and a third fiber at angles to each other, with each fiber pair forming distinct angles. This forms an amorphous reinforcement configuration that effectively resists crack propagation in all directions, thereby comprehensively countering random crack growth and delivering more thorough reinforcement.

To clarify objectives, technical solutions, and advantages of the present disclosure, the technical solutions of the the present disclosure will be described clearly and completely below with reference to the accompanying drawings. It should be understood that the described-below embodiments merely represent a portion of the present disclosure, not all of them.

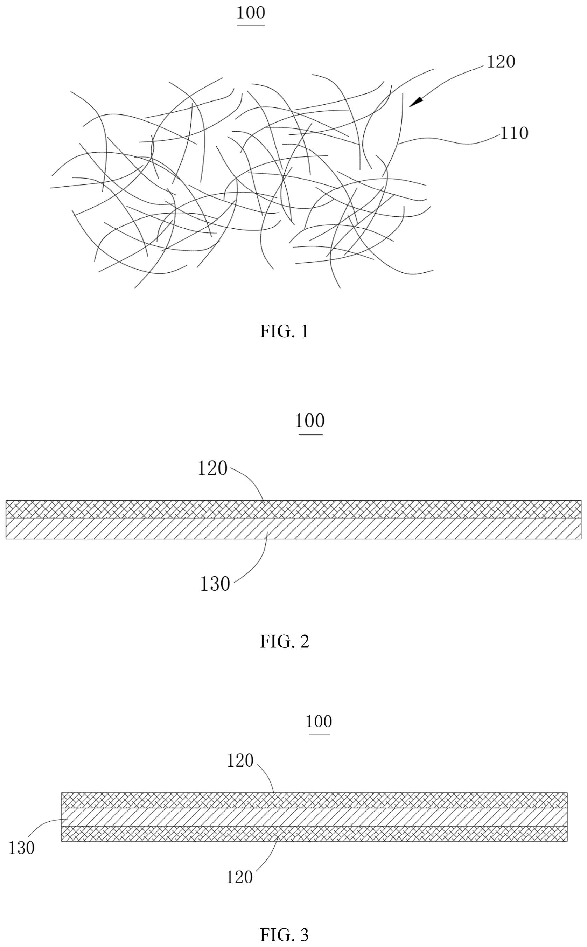

To address the aforementioned technical problems, some embodiments of the present disclosure are described below with reference to FIG. 1 through FIG. 5.

On one hand, as shown in FIG. 1 to FIG. 3, a reinforced structural layer is provided according to an embodiment of the present disclosure. The reinforced structural layer includes a plurality of fibers 110.

Specifically, as shown in FIG. 1, the plurality of fibers 110 includes a first fiber, a second fiber, and a third fiber. In some embodiments, a length of each of the fibers 110 ranges from 1mm to 150mm, so that each of the fibers 110 is a short fiber which can be regarded as straight. Any two of the first fiber, the second fiber, and the third fiber are arranged at an angle to each other, and the angle formed by any two fibers is different from the angle between any other two fibers. The plurality of fibers 110 are connected to form a fiber structural layer 120, so that the extension directions of the plurality of fibers 110 are oriented in different directions.

In the reinforced structural layer 100, due to any two of the first fiber, the second fiber, and the third fiber being arranged at an angle to each other and any two angles being different, so as to enable the extension directions of the plurality of fibers 110 to face various directions. The reinforced structural layer 100 can form an amorphous reinforcement configuration that can effectively resist crack propagation in various directions, thereby effectively countering random crack propagation and providing more comprehensive reinforcement. Compared to the existing technologies that only enhance interface properties in one direction, the reinforced structural layer 100 can provide the comprehensive reinforcement in multiple directions, reducing the risk of interface failure.

Additionally, since the reinforced structural layer 100 adopts an amorphous reinforcement form, it is suitable not only for narrow and thin structural interfaces, but also for large curved surfaces and thick blade root interfaces, so as to enable the reinforced structural layer 100 to be widely applied to various critical interfaces of a wind turbine blade 200, such as blade root interfaces and spar cap interfaces. Compared to the existing reinforcement solutions that are limited to specific shapes and thicknesses, the reinforced structural layer 100 has greater adaptability, enabling reinforcement of a broader range of components.

Taking the wind turbine blade 200 as an example, the reinforced structural layer 100 is installed on the wind turbine blade 200. By reinforcing key parts such as the blade root interface, the overall performance and lifespan of the wind turbine blade 200 can be effectively improved. The reinforced wind turbine blade 200 can better withstand wind loads and reduce performance degradation caused by interface failure, thereby increasing the power generation efficiency of the wind turbine. This approach reduces blade damage and maintenance downtime caused by interface failure, thereby improving operational efficiency and reliability of wind turbines.

Specifically, the plurality of fibers 110 may further include a fourth fiber, a fifth fiber, and so forth. The fourth fiber and the fifth fiber may be arranged at an angle to each other or may not be arranged at an angle. The angle formed by the fourth fiber and the fifth fiber may be the same as or different from the angle formed by the first fiber and the second fiber.

It should be noted that if any of the plurality of fibers 110 is curved or arc-shaped, the extension direction of the curve or arc at each point is a tangent direction at that point.

Specifically, the plurality of fibers 110 can be made of any existing fiber material such as glass fibers, hemp fibers, bamboo fibers, or carbon fibers, etc. In the embodiment of the present disclosure, no specific restrictions are imposed on the material of the fibers 110.

In one embodiment, the length of each of the plurality of fibers 110 ranges from 1 mm to 150 mm.

The plurality of fibers 110 within the reinforced structural layer 100 have lengths ranging from 1 mm to 150 mm, thus the fibers 110 are relatively short. When the plurality of fibers 110 are arranged and distributed, it is easy to cause the extension direction of the plurality of fibers 110 to face multiple directions, forming an amorphous reinforcement that can effectively resist crack propagation in all directions, thereby effectively countering random crack propagation and achieving more comprehensive reinforcement effects.

Specifically, if the lengths of the fibers 110 are excessively short (e.g., significantly less than 1 mm), the reinforcement effect of the fibers 110 is significantly weakened. The entanglement and interaction among the fibers 110 weaken, making it difficult to form a stable and effective reinforcement network structure. When the fibers 110 are subjected to external forces, it is likely to occur problems such as the fibers 110 pulling out or overall structural looseness, which cannot fully exert the strengthening effect on the interfaces, thereby reducing the mechanical properties and reliability of the reinforced structural layer 100.

Specifically, if the lengths of the fibers 110 are excessively long (e.g., significantly greater than 150 mm), the excessively long fibers 110 tend to form a certain orientation when randomly arranged. This results in directional reinforcement effects that contradict the original design intention of amorphous reinforcement forms and cannot achieve comprehensive reinforcement in multiple directions.

Specifically, the lengths of the fibers 110 are set within the range of 1 mm to 150 mm, the extension direction of the fibers 110 can be oriented towards multiple directions when the fibers 110 are randomly arranged. This facilitates excellent connectivity and ensures the integrity and consistency of the reinforced structural layer 100.

In one embodiment, the plurality of fibers 110 are formed into a fiber structural layer 120 through a weaving process or a bonding process.

The weaving process can interweave and entangle the plurality of fibers 110 to form a dense and stable fiber structural layer 120, which can effectively restricts displacement of the fibers 110, and enhance synergistic effect among the plurality of fibers 110 each other, thereby improving the overall tensile and shear resistance of the fiber structural layer 120. This enables the structural layer 20 to maintain the structural integrity under complex external forces, and is less likely to deform or disintegrate. For example, in the dynamic operating environment of the wind turbine blade 200, it can better accommodate various stress changes caused by wind loads.

The bonding process can firmly connect the plurality of fibers 110 together using an adhesive, forming a continuous bonded interface among the plurality of fibers 110. This further enhances the structure integrity and stability of the fiber structural layer 120, ensuring that the performance of the fiber structural layer 120 may not be reduced due to the plurality of fibers 110 loosening during long-term use.

Weaving or bonding facilitates the uniform distribution of the plurality of fibers 110 within the fiber structural layer 120, enabling stress to be transmitted and dispersed more evenly across each of the plurality of fibers 110. When subjected to the external forces, the plurality of fibers 110 can collectively bear the load, thereby preventing premature failure caused by localized stress concentration and enhancing the reinforcement effect on the interfaces.

The weaving process or the bonding process is relatively simple, and thus facilitating large-scale production of the fiber structural layer 120 and reducing manufacturing costs.

Specifically, during the weaving process, the plurality of fibers 110 can be woven into the fiber structural layer 120 using weaving techniques such as plain weave, twill weave, or satin weave. In the embodiment of the present disclosure, no specific restrictions are imposed on the weaving method.

It should be noted that during the weaving process on the plurality of fibers 110, an appropriate amount of adhesive may also be incorporated to bond the plurality of fibers 110, thereby ensuring a secure connection.

Specifically, the bonding process such as thermal compression bonding, chemical adhesive bonding, or mechanically assisted bonding may be employed to bond the plurality of fibers 110 into the fiber structural layer 120. In the embodiment of the present disclosure, the specific bonding method is not restricted.

For example, the plurality of fibers 110 can be bonded using a hot pressing device under specific temperature and pressure conditions. This results in the fiber structural layer 120 with high bonding strength and excellent interface properties, and thus the fiber structural layer 120 can be suitable for interfaces such as the spar cap interfaces and the blade root interfaces of the wind turbine blade 200.

In one embodiment, as shown in FIG. 2 and FIG. 3, the reinforced structural layer 100 further comprises a flexible support layer 130, where the fiber structural layer 120 is coated on an outer wall surface of the flexible support layer 130. The flexible support layer 130 and the fiber structural layer 120 are formed into the reinforced structural layer 100 through a weaving process.

During the weaving process, the plurality of fibers 110 are randomly distributed across the flexible support layer 130. The flexible support layer 130 serves as a stable foundation, to provide a relatively flat and stable bearing surface for the plurality of fibers 110. This ensures the fibers maintain precise relative positioning during arrangement and weaving, preventing disorder and misalignment caused by the inherent flexibility and fluidity of the plurality of fibers 110. This not only enhances weaving efficiency of weaving, but also ensures that the fiber structural layer 120 has a more uniform distribution of the fibers 110.

Through the weaving process, the flexible support layer 130 and fiber structural layer 120 are integrated into a tightly interconnected whole. This effectively prevents relative slippage or separation between the fiber structural layer 120 and the flexible support layer 130, thereby ensuring the integrity of the reinforced structural layer 100 under long-term use and various operating conditions.

Additionally, the flexible support layer 130 can provide supplementary support and cushioning for the reinforced structural layer 100. When subjected to external forces, the flexible support layer 130 disperses stress, preventing stress concentration in localized areas of the fiber structural layer 120 and reducing the risk of the fiber 110 fracture within the fiber structural layer 120. Compared to relying solely on the fiber structural layer 120, the overall strength and toughness of the reinforced structural layer 100 are significantly enhanced. This enables the reinforced structural layer 100 to better maintain shape and performance stability under complex loading conditions, such as bending and torsion experienced by the wind turbine blade 200 during strong winds, thereby effectively improving the reliability and durability of the reinforced structural layer 100.

Specifically, as shown in FIG. 2, the fiber structural layer 120 may be provided to cover one side of the flexible support layer 130. As shown in FIG. 3, two fiber structural layers 120 may be provided to cover opposite sides of the flexible support layer 130 respectively, and thus further enhancing the reliability and durability of the reinforced structural layer 100. In the embodiment of the present disclosure, no specific limitation is imposed on the number of the fiber structural layer 120.

In one embodiment, the reinforced structural layer 100 further comprises an adhesive, and the adhesive content accounts for 1% to 12% of the total content of the reinforced structural layer 100.

When the adhesive content constitutes 1% to 12% of the total content of the reinforced structural layer 100, the adhesive can provide sufficient bonding strength without causing excessive hardening of the reinforced structural layer 100 that would compromise its flexibility, so that the reinforced structural layer 100 can maintain sufficient rigidity to withstand significant loads while retaining flexibility to accommodate deformation, so as to meet the comprehensive structural performance requirements of the wind turbine blade 200 under varying operating conditions.

The adhesive can fill a minute gap between the plurality of fibers 110 each other, enabling stress to transfer more uniformly and smoothly throughout the fiber network. This helps prevent stress concentration points, reduces the risk of the structural damage caused by excessive localized stressing. Consequently, it further enhances the reliability and durability of the reinforced structural layer 100, and extends the service life of the reinforced structural layer 100.

Specifically, excessive adhesive content can cause the reinforced structural layer 100 to harden excessively. The excess adhesive fills too much space, causing the reinforced structural layer 100 to lose its necessary flexibility. When subjected to external forces, it struggles to deform appropriately to distribute stress. Instead, stress concentration in stiffer areas can lead to cracks or fractures, thereby reducing the overall reliability and durability of the reinforced structural layer 100.

Specifically, if the adhesive content is too low, the bonding force among the plurality of fibers 110 becomes insufficient. When subjected to external forces, the plurality of fibers 110 are prone to relative slippage and displacement, preventing effective collaborative action. This significantly reduces the overall strength and stability of the reinforced structural layer 100, failing to achieve the intended reinforcement effect.

Specifically, the adhesive may be selected from existing adhesives such as epoxy resin or polyurethane. In the embodiment of the present disclosure, no specific restrictions are imposed on the type of adhesive.

For example, epoxy resin exhibits excellent adhesive properties, and thus providing strong adhesion to various fiber materials. The reinforced structural layer 100 formed after curing possesses high strength and good chemical stability, maintaining bonding effectiveness under different environmental conditions to ensure the long-term stability of the reinforced structural layer 100.

In one embodiment, a weight per unit area of the fiber structural layer 120 is a, which satisfies a ≤ 600 g/m².

By limiting the weight per unit area of the fiber structural layer 120 to be less than 600 g/m², so that the structural layer 20 remains relatively thin and lightweight. In application scenarios such as the wind turbine blade 200, the lighter fiber structural layer 120 facilitates overall lightweight design for the components. The rotational inertia force that the wind turbine blade 200 needs to overcome during rotation is reduced, thereby enabling the wind turbine blade 200 to respond more rapidly to wind speed changes and improving the efficiency of converting wind energy into electrical energy.

Specifically, if a > 600 g/m², the excessively heavy fiber structural layer 120 of the wind turbine blade 200 significantly increases the overall weight of the wind turbine blade 200, causing the wind turbine to consume more energy to drive the wind turbine blade 200 to rotate during operation, thereby reducing the efficiency of converting wind energy into electrical energy.

In one embodiment, a diameter d of each of the plurality of fibers 110 is d, which satisfies 9µm ≤ d ≤ 24µm.

If the diameter d of each of the plurality of fibers 110 satisfies 9µm ≤ d ≤ 24µm, the fiber 110 can achieve a favorable balance between strength and flexibility. The finer fiber 110 (e.g., approximate to 9µm) has a higher specific surface area, which can form a tighter interface connection when combined with adhesives, etc., which is conducive to stress transfer and thus enhances the overall strength of the reinforced structural layer 100. Conversely, the relatively thicker fiber 110 (e.g., approximate to 24µm) can provide better tensile and bending resistance, and is less likely to break when subjected to large external forces. This enhances the stability of the reinforced structural layer 100 and ensuring more reliable performance in complex loading conditions.

Specifically, if the diameter of each of the plurality of fibers 110 is too small, entanglement easily occurs during weaving or other forming processes, increasing processing complexity and difficulty while severely impacting production efficiency. Moreover, excessively small diameter results in relatively low inherent strength of the fiber 110, making it prone to fracture under external forces.

Specifically, if the diameter of each of the plurality of fibers 110 is excessively large, the reinforced structural layer 100 becomes rigid and loses flexibility. When facing scenarios requiring deformation capacity to distribute stress, such as the dynamic bending and torsion of the wind turbine blade 200 in wind, the reinforcing structural layer 100 is difficult to adapt and is prone to cracking or fracture due to stress concentration in rigid parts, reducing the structural resistance to damage.

In one embodiment, the plurality of fibers 110 are at least one of glass fibers, carbon fibers, natural fibers, or thermoplastic fibers.

The glass fibers have high strength and good chemical stability at relatively low cost, and can provide fundamental mechanical support and environmental resistance for the reinforced structural layer 100.

The carbon fibers have ultra-high strength and lightweight properties, which can significantly enhance the structural load-bearing capacity and rigidity to meet the application scenarios that require high performance.

The natural fibers such as hemp and bamboo fibers have advantages such as renewability, environmental friendliness, and low density.

The thermoplastic fibers have good plasticity and processability, which can facilitate to form a complex-shaped structure of the fiber structural layer 120 and thus improving production efficiency and design flexibility.

By selecting at least one material or combining multiple material of the fibers 110, the performance optimization and complementarity can be achieved according to specific application requirements and cost budgets, thereby meeting various different engineering requirements.

For example, in high-performance scenarios, carbon fiber can be dominant with thermoplastic fibers as a secondary material to enhance recyclability.

For example, in extreme environmental scenarios, a combination of the carbon fibers and the glass fibers can be selected to strengthen corrosion resistance and fatigue resistance.

According to some embodiments of the present disclosure, as shown in FIG. 1 to FIG. 5, a wind turbine blade 200 is provided. The wind turbine blade 200 includes a layup structure 210 and a reinforced structural layer 100.

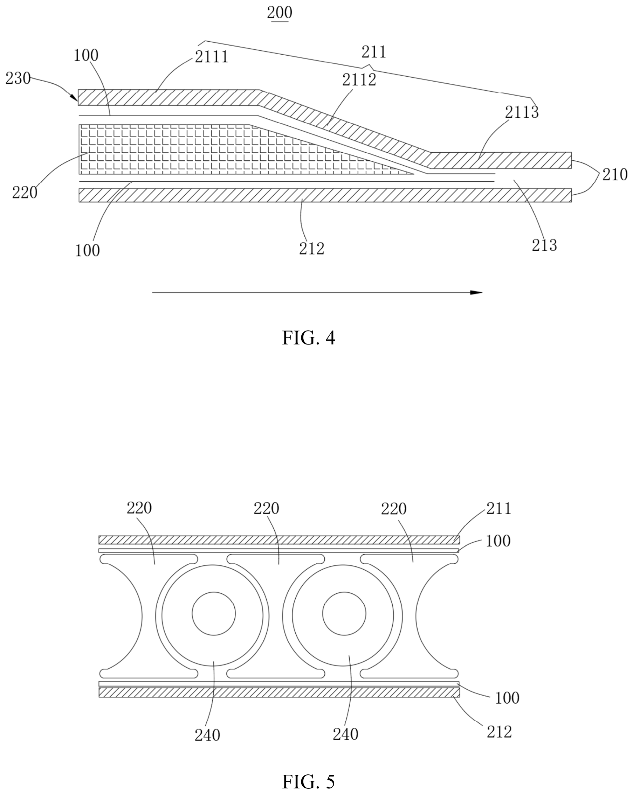

Specifically, as shown in FIG. 4, the layup structure 210 comprises an inner layer 211 and an outer layer 212. The inner layer 211 and the outer layer 212 are spaced apart, and an accommodating cavity 213 is formed between the inner layer 211 and the outer layer 212.

The wind turbine blade 200 adopts the reinforced structural layer 100 positioned within the accommodating cavity 213 formed between the inner layer 211 and the outer layer 212. The reinforced structural layer 100 adopts an amorphous reinforcement form, thus the reinforced structural layer 100 can effectively resist crack propagation in all directions, and effectively countering random crack propagation. This significantly improves the overall performance and lifespan of the wind turbine blade 200. The reinforced wind turbine blade 200 can better withstand wind loads, reduce performance degradation caused by interface failure, and consequently enhance the power generation efficiency of the wind turbine. It also minimizes blade damage and downtime for maintenance due to interface failure, thereby improving the operational efficiency and reliability of the wind turbine.

In addition, as the reinforced structural layer 100 adopts an amorphous reinforcement form, it is suitable for large-curvature and thick-section blade root interfaces. This enables the reinforced structural layer 100 to be widely applied to multiple critical interfaces of the wind turbine blade 200, such as blade root interfaces and spar cap interfaces.

Specifically, the inner layer 211 and outer layer 212 may be configured in any existing shape. For example, the outer layer 212 may be configured as a smooth plane or curved surface to reduce wind resistance. The inner layer 211 may be configured to match the shape of the filler material between the inner layer 211 and the outer layer 212. In the embodiment of the present disclosure, no specific restrictions are imposed on the shape of the inner layer 211 and the shape of the outer layer 212.

Specifically, the accommodating cavity 213 may contain one or more layers of the reinforced structural layer 100. The specific configuration may be adapted to the actual application scenario of the wind turbine blade 200. In the embodiment of the present disclosure, no specific restrictions are imposed on the number of reinforced structural layers 100 within the accommodating cavity 213.

Specifically, the reinforced structural layer 100 may be configured only in a portion of the accommodating cavity 213 or across the entire cavity area.

In one embodiment, as shown in FIG. 4, the wind turbine blade 200 further comprises a plurality of unidirectional (UD) blocks 220. The plurality of UD blocks 220 are spaced apart within the accommodating cavity 213, and the reinforced structural layer 100 is provided between the UD block 220 and the inner layer 211 and/or the outer layer 212.

The plurality of UD blocks 220 are critical load-bearing components within the wind turbine blade 200, constituting high-risk area of stress on the wind turbine blade 200. The inclusion of the reinforced structural layer 100 between the plurality of UD blocks 220 and the inner layer 211 and/or the outer layer 212 can significantly enhance the bonding strength between the plurality of UD blocks 220 the inner layer 211 and/or the outer layer 212. When the wind turbine blade 200 bears wind loads, immense forces act between the plurality of UD blocks 220 and the layup structure 210. The reinforcement layer 100 can effectively disperse and transfer these stresses, preventing delamination, cracking, and other problems caused by weak connection points. This enhances the overall structural reliability and stability of the wind turbine blade 200, thereby ensuring safe and stable operation even under severe wind conditions.

It should be noted that each of the UD blocks 220 is a reinforced structural layer 100 consisting of units in composite materials, which is composed of unidirectional continuous fibers 110 (such as carbon fiber and glass fiber) combined with a resin matrix (such as epoxy resin). The core characteristic of the UD Block 220 is the highly oriented arrangement of fibers 110 along a single direction, thereby creating exceptionally high axial strength and stiffness, and commonly used in critical areas subjected to high loads in specific directions.

Specifically, the reinforcement layer 100 may be positioned between the UD blocks 220 and the inner layer 211, or between the UD blocks 220 and the outer layer 212, or between the UD blocks 220 and the inner layer 211 as well as between the UD blocks 220 and the outer layer 212.

In one embodiment, as shown in FIG. 4, the inner layer 211 comprises a first connection segment 2111, a second connection segment 2112, and a third connection segment 2113. The first connection segment 2111, the second connection segment 2112, and the third connection segment 2113 are sequentially connected. The distance between the first connection segment 2111 and the outer layer 212 is greater than the distance between the third connection segment 2113 and the outer paving layer 212.

Along the direction from the first connection segment 2111 to the third connection segment 2113, the distance between the second connection segment 2112 and the outer layer 212 gradually decreases. The UD block 220 extends from the first connection segment 2111 to the second connection segment 2112, while the reinforced structural layer 100 extends from the first connection segment 2111 to the third connection segment 2113.

The varying spacing between different connection segments of the inner layer 211 and the outer layer 212 form a gradient structure. Along the direction from the first connection segment 2111 to the third connection segment 2113, the distance between the second connection segment 2112 and the outer layer 212 gradually decreases, thereby enabling a smoother stress transition from the inner layer 211 to the outer layer 212 during stress transmission. The extended arrangement of the UD block 220 and the reinforced structural layer 100 complements the gradient structure, and further guiding stress distribution along optimal pathways. This effectively prevents stress concentration in localized areas, significantly enhancing the overall stress-bearing capacity and structural stability of the wind turbine blade 200, while reducing the risk of blade damage caused by stress concentration.

During the actual operation of the wind turbine blade 200, the wind forces and stresses experienced by different sections are complex and varied. The region near to a root 230 of the wind turbine blade 200 typically bears greater bending moments and shear forces, while the tip section experiences relatively lower stresses. The structural design of the inner layer 211, along with the arrangement of the UD blocks 220 and the reinforced structural layer 100, can enable better adaptation to the stress characteristics of the wind turbine blade 200. The changes from the first connection segment 2111 to the third connection segment 2113, along with the corresponding component configurations, can ensure appropriate reinforcement and support across different stress zones of the wind turbine blade 200. This enhances the performance of the wind turbine blade 200 under varying operating conditions and improves the adaptability of the wind turbine blade 200 to complex wind field environments.

By rationally designing the extension range of the UD blocks 220 and the reinforced structural layer 100, materials can be precisely configured according to the stress requirements of different parts of the wind turbine blade 200. In areas with high stress, such as near the first connection segment 2111, the UD blocks 220 and the reinforced structural layer 100 can provide stronger reinforcement effects. Conversely, in areas with low-stress, the material usage and the reinforcement intensity are correspondingly reduced. This approach can enhance the material utilization and reduce the production costs while maintaining the performance of the wind turbine blade 200, and also contribute to reduce the weight of the wind turbine blade 200, thereby improving the energy conversion efficiency of the wind power generation system.

It should be noted that one embodiment of the present disclosure defines the direction from the first connection segment 2111 to the third connection segment 2113 as indicated by an arrow in FIG. 4.

Specifically, the first connection segment 2111 and the third connection segment 2113 may be arranged parallel to the outer layer 212, while the second connection segment 2112 is inclined relative to the outer layer 212.

In one embodiment, as shown in FIG. 4, the reinforced structural layer 100 is coated on an outer wall surface of each of the plurality of UD blocks 220, and the plurality of UD blocks 220 are disposed at the root 230 of the wind turbine blade 200.

The root 230 of the wind turbine blade 200 is a critical part that connects the wind turbine blade 200 with a turbine hub of wind turbine blade 200, thereby enduring immense loads and stresses. Placing the plurality of UD blocks 220 at the root 230 of the wind turbine blade 200 and wrapping the outer wall surfaces of UD blocks 220 with the reinforced structural layer 100 can greatly enhance the structural strength and connection stability of the root 230. This ensures a secure and reliable connection between the wind turbine blade 200 and the turbine hub, and preventing serious problems such as loosening and detachment during operation.

When wind force acts upon the wind turbine blade 200, the root 230 may generate highly concentrated stress. The reinforced structural layer 100 encasing the UD blocks 220 effectively disperses these concentrated stresses over a larger area. Through the synergistic interaction between the reinforced structural layer 100 and the UD block 220, the stresses are transmitted more uniformly to other parts of the wind turbine blade 200, thereby reducing the situation of excessive local stress at the root 230, lowering the risk of fatigue cracks and damage at the root 230, and extending the service life of the wind turbine blade 200.

Specifically, the outer wall surfaces of the plurality of UD blocks 220 may be covered with one or more layer of the reinforced structural layer 100. In the embodiment of the present disclosure, no specific limitation is imposed on the number of layers of the reinforced structural layer 100 on the outer wall surfaces of the plurality of UD blocks 220.

In one embodiment, the wind turbine blade 200 further comprises a plurality of bushing assemblies 240. The plurality of bushing assemblies 240 are spaced apart within the accommodating cavity 213, and one bushing assembly 240 is positioned between any two adjacent UD blocks 220. The reinforced structural layer 100 is coated on the outer wall surface of each of the bushing assemblies 240, and the bushing assemblies 240 are located at the root 230 of the wind turbine blade 200.

The plurality of bushing assemblies 240 are critical structural elements connecting the wind turbine blade 200 to other components such as the turbine hub, and are located at the root 230 of the wind turbine blade 200 to provide a reliable mechanical connection point for the wind turbine blade 200. The plurality of bushing assemblies 240 are distributed at intervals, and can enable more uniform distribution of connection forces across the root 230 of the wind turbine blade 200, so as to avoid excessive stress concentration at single point, enhance the overall stability of the connection between the wind turbine blade 200 and the turbine hub, and prevent hazardous situations such as loosening or detachment of the wind turbine blade 200.

In the embodiment of the present disclosure, one bushing assembly 240 is positioned between two adjacent UD blocks 220, to ensure the bushing assembly 240 that is securely installed at the root 230 of the wind turbine blade 200. The reinforced structural layer 100 is coated on the outer wall surface of the bushing assembly 240, thereby forming an effective stress transfer path between the bushing assembly 240 and the wind turbine blade 200. When the wind force acts upon the wind turbine blade 200, the load borne by the bushing assembly 240 is more effectively transferred to other regions of the blade 200 through the reinforced structural layer 100. Working together with the UD block 220 to further disperse the stress at the root 230 reduce stress concentration, thereby enhancing the fatigue resistance and load-bearing capacity of the root 230 of the wind turbine blade 200, and extending the service life of the wind turbine blade 200.

To better illustrate the reinforcement effect of the structural reinforcement layer 100, the following experimental tests serve as examples.

Example 1: The reinforced structural layer 100 is woven from the plurality of fibers 110. In this example, the weight per unit area of each fiber 110 is 200g/m², the material of the fibers 110 is carbon fibers, the length of each fiber 110 is 5mm, and the diameter of each fiber 110 is 10µm. Placing this reinforced structural layer 100 between the plurality of UD blocks 220 and the layup structure 210, the Type I fracture toughness at this interface can be increased by 80%.

Example 2: The reinforced structural layer 100 is bonded using the plurality of fibers 110. In this example, the weight per unit area of each fiber 110 is 500g/m², the adhesive content of the fibers 110 constitutes 2% of the total content of the reinforced structural layer 100, the material of the fibers 110 is thermoplastic fibers, the length of each fiber 110 is 10mm, and the diameter of each fiber 110 is 15µm. Placing this reinforced structural layer 100 between the inner layer 211 and the outer layer 212, the Type I fracture toughness at this interface can be increased by 60%.

Example 3: The reinforced structural layer 100 is bonded using the plurality of fibers 110. In this example, the weight per unit area of each fiber 110 is 350g/m², the adhesive content of the fibers 110 constitutes 10% of the total content of the reinforced structural layer 100, the material of the fibers 110 is glass fibers, the length of each fiber 110 is 20 mm, and the diameter of each fiber 110 is 18µm. Wrapping this reinforced structural layer 100 around the bushing assemblies 240 located at the root 230 of the wind turbine blade 200, the Type I fracture toughness at this interface can be increased by 120%.

Comparative Example 1: The reinforced structural layer 100 is woven from the plurality of fibers 110. In this example, the weight per unit area of each of the fibers 110 is 500g/m², the material of the fibers 110 is carbon fibers, the length of each fiber 110 is 200mm, and the diameter of each fiber 110 is 10µm. Placing this reinforced structural layer 100 between the UD blocks 220 and the layup structure 210, the Type I fracture toughness at this interface can be increased by 20%.

Comparative Example 2: The reinforced structural layer 100 is bonded using the plurality of fibers 110. In this example, the weight per unit area of each fiber is 800g/m², the adhesive content of the fibers 110 constitutes 2% of the total content of the reinforced structural layer 100, the material of the fibers 110 is thermoplastic fibers, the length of each fiber 110 is 10mm, and the diameter of each fiber 110 is 15µm. Placing this reinforced structural layer 100 between the inner layer 211 and the outer layer 212, the Type I fracture toughness at this interface may be reduced by 10%.

Comparative Example 3: The reinforced structural layer 100 is bonded using the plurality of fibers 110. In this example, the weight per unit area of each fiber is 350g/m², the adhesive content of the fibers 110 constitutes 20% of the total content of the reinforced structural layer 100, the material of the fibers 110 is glass fibers, the length of each fiber 110 is 20mm, and the diameter of each fiber 110 is 18µm. Wrapping this reinforced structural layer 110 around the bushing assemblies 240 located at the root 230 of the wind turbine blade 200, the Type I fracture toughness at this interface may be reduced by 30%.

The terms "above," "below," and similar expressions are used to describe the relative positions of various structures in the drawings solely for the purpose of clarity in description and do not limit the scope of the present disclosure. Changes or adjustments to these relative positions, provided they do not substantially alter the technical content, should also be considered within the scope of the present disclosure.

It should be noted that in the present disclosure, unless otherwise explicitly defined or limited, the placement of the first feature "on" or "below" the second feature may involve direct contact between the first feature and the second feature, or indirect contact through an intermediate interface. Furthermore, the placement of the first feature "above," "on top of," or "on the surface of," the second feature may indicate the first feature being directly above or diagonally above the second feature, or may simply denote that the first feature is at a higher horizontal level than the second feature. The term "below," "under," or "on the lower side of," the second feature may refer to the first feature being directly below or diagonally below the second feature, or may simply indicate that the first feature is at a lower horizontal level than the second feature.

Furthermore, in the present disclosure, unless otherwise explicitly defined or limited, the terms such as "mounted," "connected," "coupled," and "fixed" should be interpreted broadly. For example, they may refer to fixed connections, removable connections, or integral structures, may denote direct connections or indirect connections via an intermediate interface, or may describe internal communication between two components or an interactive relationship between two components. For those skilled in the art, the specific meaning of the above-described terms in the present disclosure can be understood based on particular circumstances.

In the specification of the present disclosure, the terms "one embodiment," "some embodiments," "illustrative embodiments," "examples," "specific examples," or "some examples" refer to the specific features, structures, materials, or characteristics described in conjunction with the embodiments or examples included in at least one embodiment or example disclosed herein. In the present specification, the illustrative expressions of the above terms may not necessarily refer to the same embodiments or examples. Moreover, the specific features, structures, materials, or characteristics described can be combined in any one or more embodiments or examples in a suitable manner.

It should be noted that the above-described embodiments are only used to illustrate the technical solution of the present disclosure, and not to limit the technical solution. Although the present disclosure has been described in detail with reference to the aforementioned embodiments, those skilled in the art should understand that they can still modify the technical solutions described in the aforementioned embodiments, or equivalently replace some or all of the technical features. These modifications or substitutions do not deviate from the essence of the corresponding technical solutions from the scope of various embodiments of the present disclosure.

## Claims

1. A reinforced structural layer (100), **characterized by** comprising:
a plurality of fibers (110), comprising a first fiber, a second fiber, and a third fiber, wherein any two of the first fiber, the second fiber, and the third fiber are arranged at an angle to each other, and the angle formed between any two fibers is different from the angle between any other two fibers, and the plurality of fibers (110) are connected to form a fiber structural layer (120) such that extension directions of the plurality of fibers (110) are oriented in different directions.

2. The reinforced structural layer (100) according to claim 1, wherein a length of each of the plurality of fibers (110) is 1mm to 150mm.

3. The reinforced structural layer (100) according to claim 1, wherein the plurality of fibers (110) are formed into the fiber structural layer (120) through a weaving process or a bonding process.

4. The reinforced structural layer (100) according to claim 1, further comprising a flexible support layer (130), wherein the flexible structural layer (130) is coated on an outer wall surface of the flexible support layer (130), and the flexible support layer (130) and the fiber structural layer (120) are formed into the reinforced structural layer (100) through a weaving process.

5. The reinforced structural layer (100) according to claim 1, further comprising an adhesive, wherein a content of the adhesive accounts for 1% to 12% of a total content of the reinforced structural layer (100).

6. The reinforced structural layer (100) according to claim 1, wherein a weight per unit area of the fiber structural layer (120) is a, which satisfies a ≤ 600g/m².

7. The reinforced structural layer (100) according to claim 1, wherein a diameter of each of the plurality of fibers (110) is d, which satisfies 9µm ≤ d ≤ 24µm.

8. The reinforced structural layer (100) according to any one of claims 1 to 7, wherein the plurality of fibers (110) are selected from at least one of the group of glass fibers, carbon fibers, natural fibers, and thermoplastic fibers.

9. A wind turbine blade (200), **characterized by** comprising:
a layup structure (210) comprising an inner layer (211) and an outer layer (212) arranged at intervals, wherein an accommodating cavity (213) is formed between the inner layer (211) and the outer layer (212);
the reinforced structure layer (100) according to any one of claims 1 to 8, wherein the reinforced structure layer (100) is disposed within an accommodating cavity (213).

10. The wind turbine blade (200) according to claim 9, further comprising a plurality of unidirectional, UD, blocks (220), wherein the plurality of UD blocks (220) are spaced apart in the accommodating cavity (213), and the reinforced structural layer (100) is disposed between the plurality of UD blocks (220) and the inner layer (211), and/or the reinforced structural layer is disposed between the plurality of UD blocks (220) and the outer layer (212).

11. The wind turbine blade (200) according to claim 10, wherein the inner layer (211) comprises a first connection segment (2111), a second connection segment (2112), and a third connection segment (2113) connected sequentially, and a distance between the first connection segment (2111) and the outer layer (212) is greater than a distance between the third connection segment (2113) and the outer layer (212);
along a direction from the first connection segment (2111) to the third connection segment (2113), a distance between the second connection segment (2112) and the outer layer (212) gradually decreases; and
the plurality of UD blocks (220) extend from the first connection segment (2111) to the second connection segment (2112), and the reinforced structural layer (100) extends from the first connection segment (2111) to the third connection segment (2113).

12. The wind turbine blade (200) according to claim 10, wherein the reinforced structural layer (100) is coated on an outer wall surface of each of the plurality of UD blocks (220), and the plurality of UD blocks (220) are disposed at a root (230) of the wind turbine blade (200).

13. The wind turbine blade (200) according to claim 10, further comprising a plurality of bushing assemblies (240) that are spaced apart within the accommodating cavity (213), wherein one bushing assembly (240) is disposed between any two adjacent UD blocks (220), the reinforced structural layer (100) is coated on an outer wall surface of each of the bushing assemblies (240), and the bushing assemblies (240) are positioned at a root (230) of the wind turbine blade (200).

14. The wind turbine blade (200) according to claim 9, wherein the reinforced structural layer (100) comprises a flexible support layer (130) being coated on an outer wall surface of the flexible support layer (130), and the flexible support layer (130) and the fiber structural layer (120) are formed into the reinforced structural layer (100) through a weaving process.

15. The wind turbine blade (200) according to claim 9, wherein the reinforced structural layer (100) comprises an adhesive, and a content of the adhesive accounts for 1% to 12% of a total content of the reinforced structural layer (100).
